Europäisches Patentamt

(19) European Patent Office

Office européen des brevets

(11) **EP 1 248 639 B1**

(12) **EUROPEAN PATENT SPECIFICATION**

(45) Date of publication and mention
of the grant of the patent:
**26.01.2005 Bulletin 2005/04**

(51) Int Cl.⁷: **A61K 31/728**, C08B 37/08

(21) Application number: **00981985.5**

(22) Date of filing: **07.11.2000**

(86) International application number:
**PCT/SE2000/002173**

(87) International publication number:
**WO 2001/034163 (17.05.2001 Gazette 2001/20)**

(54) **HYALURONAN PRODUCT AND PROCESS FOR MANUFACTURING THEREOF**

HYALURONAN ENTHALTENDE ZUSAMMENSETZUNG UND VERFAHREN ZU IHRER
HERSTELLUNG

HYALURONAN ET PROCEDE DE FABRICATION ASSOCIE

(84) Designated Contracting States:
**AT BE CH CY DE DK ES FI FR GB GR IE IT LI LU
MC NL PT SE TR**

(30) Priority: **08.11.1999 SE 9904066**

(43) Date of publication of application:
**16.10.2002 Bulletin 2002/42**

(73) Proprietor: **Bio-Hyos AB
753 22 Uppsala (SE)**

(72) Inventor: **Akerblom, Jim
S-753 12 Uppsala (SE)**

(74) Representative: **Aldenbäck, Ulla Christina et al
Dr. Ludwig Brann Patentbyra AB,
P.O. Box 1344
751 43 Uppsala (SE)**

(56) References cited:
EP-A1- 0 875 248      EP-A2- 0 228 698
EP-A2- 0 320 164      US-A- 4 141 973
US-A- 5 681 825

## Description

### Field of the invention

This invention relates to a chemically unmodified hyaluronan product which has enormously high molecular weight and extremely high viscosity i.e. zero shear viscosity. This unique product is durable and at the same time viscoelastic, and perfectly compatible within the biocompatible materials, for instance, as a cartilage substitute and as a intervertebral disc. The invention also relates to a process for manufacturing of said product.

### Background of the invention

Hyaluronan (hyaluronic acid) is a naturally occurring polysaccharide which was first isolated in 1934 and 24 years later the structure of the molecule was totally defined. The first commercial product (Healon, trademark) was launched in 1980 within eye surgery, a product which is chemically unmodified. Since that time many similar products have been launched, some of them consist of only hyaluronan, with different molecular weight, from 0.5 to 8.0 million (Dalton) sterilized solution as described in the literature.

Most products are however, chemically modified hyaluronan, i.e. an extra chemical substance is added to the original hyaluronan molecule, to achieve higher viscoelastic properties, but it is always associated with risky side-effects. The cross-linked hyaluronan is known since 1963 (T.C. Laurent et al). A further drawback of cross-linked hyaluronan is the relatively short residence time in human tissues.

The chemical structure of hyaluronan is independent of origin in that hyaluronan is a linear polysaccharide without branching. The polysaccharide consists of a repeating disaccaharide unit of N-acetyl-D-glucosamine and glucuronate linked by $\beta(1{\rightarrow}3)$ and $\beta$ $(1{\rightarrow}4)$ glycosidic bonds. It is well known that hyaluronan molecule in solution adopts a conformation of a stiffened random coil. Hyaluronan is produced by an enzyme complex in cell membranes. The enzymes produce hyaluronan from intracellular constituents, and the polysaccharide is directly extruded to the extracellular space.

The production of hyaluronan may be based on bacterial synthesis or on extraction from biological sources such as umbilical cord and rooster combs. The molecular weight of the isolated material depends, inter alia, on the quality of the raw material and the methods used for leaching, extraction, purification, sterilisation and the quality system. Strains of certain Streptococcus bacteria are capable of producing hyaluronan with molecular weights lower than leaching and extraction from rooster combs.
Hyaluronan produced by bacteria has to be cross-linked to achieve the higher molecular weight products required within the medical field.

To avoid the drawbacks with a chemically modified substance an unmodified hyaluronan product with high molecular weight is infinitely preferable.

US-A-4141973 discloses a sterile, pyrogen-free, non-antigenic hyaluronic acid fraction having an average molecular weight of at least 1,200,000 Dalton (Healon), with a protein content of less than 0.5 % by weight. The process is very comprehensive and contains many complicated procedures and repeated purification steps, such that it requires 236 hours at a minimum. US-A-4141973 does not mention or discuss different viscosity parameters, which are of importance for all types of rheological solutions, i.e. zero shear viscosity, elasticity, etc.

US-A-5681825 discloses a further development of the process disclosed in US-A-4141973, i.e. a preparation of hyaluronic acid, a chemically unmodified sterilized solution with a molecular weight in the range of 4 to 6.5 million Dalton, which can be used to facilitate surgical operations that involve the eye or eye area. The method is based on many extractions, precipitations under various pH conditions and is also characterized by a very long and comprehensive process time. US-A-5681825 disclose a zero shear viscosity of hyaluronan which is about ten times higher than that of Healon above, i.e. 2,500,000 mPas, but this value is much too low to qualify the product as a solid body solution.

EP-A2-0320164 discloses a chemically modified hyaluronan preparation characterized by cross-linking different aldehyde groups which are covalently bonded to the hyaluronan molecular chains, i.e. a change of the primary structure of the molecule has taken place and a new polymer is developed (Hylan). Hylan discloses a viscosity of up to 1,000,000 mPas at shear rate 0.055 Hz, which is equivalent to a molecular weight of about 7 million Dalton with regard to extrapolation to zero shear rate. These desirable changes in physical properties must be balanced against any undesirable changes in biocompatibility, and many of these hyaluronan esters have shown increased activation of tissue reactions that differs greatly from that of unmodified hyaluronans. The method has a process time from 166 hours to 262 hours. EP-A2-0320164 does not differ from US-A-5681825 and US-A-4141973 regarding the magnitude of the obtained Mw.

All the above-described documents have products exhibiting a molecular weight below 8 million Dalton and are, among other things, complicated and require long process times. The most important parameter from a medical, therapeutic point of view is the zero shear viscosity, i.e. with a zero shear viscosity lower than about 50,000,000 mPas the products have relatively low viscosity, elasticity, etc.

## Summary of the invention

The present invention provides chemically unmodified hyaluronan with greatly improved molecular weight and with multiple applications within the medical field.

This invention has been made possible through observing many previously unknown quality parameters plus the application of new technology with a combination of many steps from treatment of the naturally occurring raw material to the sterile end product. The process according to the invention is very rapid and takes at the most 1½ day to perform.

The process for production of hyaluronan products gives according to the invention sterile products with zero shear viscosity from 5 million to 30 billion mPa s, which is totally unique. Due to the incredibly high shear viscosity it is possible to create various biocompatible products to be used in human beings and animals.

According to the present invention, greatly improved molecular weights are obtained and with suitable concentration, a product with specific viscoelastic properties can be created. Within the molecular weight range of 9-25 million Daltons and the concentration range of 10-39 mg/ml zero shear viscosity (from 5 millions to 30 billions mPa s) is achieved according to the invention with a shear rate of 0.001 Hz.

## Viscoelastic behaviour

The connection between zero shear viscosity and molecular weight and concentration is well known, see the equation below.

$$\text{Zero shear viscosity} = 5.3 \times 10^{-26} \times (\text{concentration} \times M_r)^{3.643} \qquad (\text{unit} = \text{Pa s})$$

To produce viscoelastic substances with high zero shear viscosity, the only parameters that can be altered to create these products are molecular weight and concentration.

Note that, the parameter concentration is a strongly limiting factor. The colloid osmotic pressure of hyaluronan is of interest in conjunction with the use of hyaluronan substance in various body compartments.
The colloid osmotic pressure is dependent on the number of molecules in solution and is thus a function of the number average molecular weight rather than the weight average molecular weight.

To arrive at an end product within the range of 9-25 million Dalton is extremely difficult, technically demanding and complicated. This patent application comprises a unique manufacturing system of sterile end products, whose vast medical significance is revolutionary for important clinical applications such as eye lenses, intervertebral discs, prostheses, etc

Hyaluronan (hyaluronic acid) has physical properties with a broad range of medical applications; in orthopedics, rheumatology, ophthalmology, dermatology, plastic surgery, otology, rhinology, neurology, urology, cardiothoracic surgery, adhesion prevention.

## Detailed description of the invention

Below a non-limiting example of the process of the invention will be described.

## I. Process for the manufacturing of extremely high molecular weight hyaluronan

### Raw material

As raw material specific roosters from the White Leghorn breed are used. They are genotypically and phenotypically selected within the molecular weight range of 10-50 millions Daltons.

### Extraction of water and salts and the reduction of microorganisms

Immediately after the combs are removed they are treated with 70% ethanol, proportion 1:5. Special equipment cleans the combs of biological impurities and this treatment is repeated 3-5 times with fresh ethanol. A diluted sodium phosphate solution can alternatively be added for the second step.

**Pre-treatment of the combs**

The combs are directly frozen to about -15 degrees Celsius sliced into extremely thin sections 0.001-0.1 mm thick, then rapidly frozen to -22 degrees Celsius in a freezing tunnel. Alternatively the combs can be ground into different particle sizes, instead of being sliced.

**Leaching of hyaluronan under nitrogen atmosphere**

In a diluted solution (0.5-2 % NaCl solution) hyaluronan is leached from the material in up to seven steps, within nitrogen atmosphere. The leaching time varies from 3 minutes to 3 hours.

**Removal of impurities under nitrogen atmosphere**

The solution is treated with adsorptive media such as hydroxyapatite in one or several steps during gentle stirring and then filtrated.

**Concentration of hyaluronan**

The solution is concentrated for example through dialysis (PEG 3000) under vacuum conditions.

**Packing and sterilisation of the hyaluronan product**

With regard to molecular weight and concentration, different products are manufactured and packed into various types of dispensers. The product can be sterilised through radiation(16-28 kg Gray). Alternatively microwaves (10-300 W, 2450 Hz) or by autoclaving or sterile filtration of a diluted solution under acceptable conditions.

**II. Medical application of the hyaluronan product**

Based on the process of the invention four ( A-D) separate intervals have been chosen for different medical applications with regard to rheological and chemical-physiological properties. Below an example in each category will be described.

**Example A: Hyaluronan product for eye surgery**

Products within range A, which have a zero shear viscosity between 100 million and 1 billion mPa s can be characterised as having a high grade of extended "jellyness" with unique viscoelastic properties.
When blinking very high shear rates occur so that the tear fluid must have a high zero shear viscosity to manage the huge shear rate. This happens at a low concentration with high molecular weight in order to provide good viscoelastic properties. Product A fulfils these properties.

**Example B: Hyaluronan product as a transplant aid**

Products within range B, which have a zero shear viscosity between 1 and 10 billion mPa s can be characterised as a "rubber ball" withstanding very high pressure while rotating within its own axis for a long period of time.
Products within this range are suitable as transport substances for transplanting of e.g. insulin producing beta-cells. By transplanting beta-cells in the hyaluronan random coil configuration, mechanisms of rejection are avoided. The beta-cells continue to be vigorous in hyaluronan and can continue to produce insulin.
Product B contains these properties.

**Example C: Hyaluronan product as a muscle support**

Products within range C, which have a zero shear viscosity between 10 and 20 billions mPa s can be characterised as having a constant viscoelastic property, independent of time. An application which demands high zero shear viscosity is incontinence, where the substance must be as viscoelastic as a rubber ball in order to support weak tissue and failing musculature. Product C contains these properties.

**Example D: Hyaluronan product as a cartilage and bone substitute**

Products within range D having a zero shear viscosity between 20 and 30 billions mPa s can be characterised as having a solid substance which is not degradable, containing a unique function of both viscous and elastic behaviour. With increasing molecular weight the inter-chain interaction stabilises the molecule through its double helix structure in hyaluronan macro-molecules, i.e. with extremely high molecular weight the molecule works as an internal cross-linked macro-molecule.
The product range D can be used as cartilage substitute and at the upper tolerance limit as a substitute for damaged discs (intervertebra disc)
The hyaluronan product remains as a very thin film between the bones even at extremely high pressures in luxations or damaged cartilage in the joints.

**Degree of purity**

The products according to the present invention have a degree of purity which is more than a 30% improvement upon Healon (trademark) with regard to endotoxin EU/ ml.

- A sterile hyaluronan solution according to the invention has the following characteristics:
- a protein content below 100 ug/g;
- an absorbance of a 1% solution at 257 nm of at the most 1.5 and at 280 nm of at the most 1.5;
- an iron content of at the most 0.1mg/g;
- a copper content of at the most 0.1 mg/g;
- an acetone content of at the most 2 mg/g;
- a ethanol content of at the most 6 mg/g;
- an endotoxin content of at the most Limulus 0.35 EU endotoxin/ml;
- a pH value from 7.0 to 7.5

Preferably the hyaluronic acid according to the invention is in the form of its sodium salt. The hyaluronic acid solution is buffered in a physiologically acceptable buffer.

**Claims**

1. A sterile chemically unmodified hyaluronan product in which the hyaluronan has a molecular weight of 9-25 million Daltons and a concentration of 10 - 39 mg/ml, said product having zero shear viscosity from 0.1 to 30 billion mPa s.

2. A product according to claim 1, wherein the zero shear viscosity is 0.1-1.0 billion mPa s.

3. A product according to claim 1, wherein the zero shear viscosity is 1.0- 10 billion mPa s.

4. A product according to claim 1, wherein the zero shear viscosity is 10-20 billion mPa s.

5. A product according to claim 1, wherein the zero shear viscosity is 20-30 billion mPa s.

6. A process for manufacturing of a high molecular weight hyaluronan product comprising the steps:

   genotypically and phenotypically selecting combs from roosters comprising hyaluronan within the molecular weight range 10 -50 million Dalton,

   extracting hyaluronan from the rooster combs, and

   processing the hyaluronan to produce a hyaluronan product having a shear viscosity of 0,1 to 30 billion mPa s.

7. A process according to claim 6, comprising the following steps after selection of the rooster combs,

   - extraction of water and salts and reduction of microorganisms;
   - pre-treatment of the combs by freezing and disrupting the combs;
   - leaching of hyaluronan;

- removal of impurities;
- concentration of hyaluronan; and
- packing and sterilisation of the hyaluronan product.

8. A process according to claim 6 or 7, wherein the rooster combs are derived from the species White Leghorn.

9. Use of the product according to any of the claims 1-5 or a product made by the process according to any of the claims 6-8 for medical applications.

**Patentansprüche**

1. Steriles, chemisch nicht modifiziertes Hyaluronanprodukt, worin das Hyaluronan ein Molekulargewicht von 9 bis 25 Millionen Dalton und eine Konzentration von 10 bis 39 mg/ml aufweist, wobei das Produkt eine Null-Scherviskosität von 0,1 bis 30 Milliarden mPa·s aufweist.

2. Produkt gemäss Anspruch 1, wobei die Null-Scherviskosität 0,1 bis 1,0 Milliarden mPa·s beträgt.

3. Produkt gemäss Anspruch 1, wobei die Null-Scherviskosität 1,0 bis 10 Milliarden mPa·s beträgt.

4. Produkt gemäss Anspruch 1, wobei die Null-Scherviskosität 10 bis 20 Milliarden mPa·s beträgt.

5. Produkt gemäss Anspruch 1, wobei die Null-Scherviskosität 20 bis 30 Milliarden mPa·s beträgt.

6. Verfahren zur Herstellung eines hochmolekularen Hyaluronanprodukts, umfassend die Schritte:

   • genotypisches und phenotypisches Selektieren von Hahnenkämmen, umfassend Hyaluronan in einem Molekulargewichtsbereich von 10 bis 50 Millionen Dalton,
   • Extraktion des Hyaluronans aus den Hahnenkämmen und
   • Verarbeitung des Hyaluronans, um ein Hyaluronanprodukt mit einer Scherviskosität von 0,1 bis 30 Milliarden mPa·s zu erzeugen.

7. Verfahren gemäss Anspruch 6, umfassend die folgenden Schritte nach Selektion der Hahnenkämme:

   • Extraktion von Wasser und Salzen und Reduktion von Mikroorganismen;
   • Vorbehandlung der Kämme durch Einfrieren und Aufbrechen der Kämme;
   • Auslösen des Hyaluronans;
   • Entfernung von Verunreinigungen;
   • Konzentration des Hyaluronans; und
   • Verpackung und Sterilisation des Hyaluronanprodukts.

8. Verfahren gemäss Anspruch 6 oder 7, wobei die Hahnenkämme von der Spezies Weisses Leghorn stammen.

9. Verwendung des Produkts gemäss einem der Ansprüche 1 bis 5, oder eines Produkts, hergestellt durch das Verfahren gemäss einem der Ansprüche 6 bis 8, für medizinische Anwendungen.

**Revendications**

1. Produit consistant en hyaluronane stérile non modifié chimiquement dans lequel le hyaluronane a un poids moléculaire de 9 à 25 millions de daltons et une concentration de 10 à 39 mg/ml, ledit produit ayant une viscosité en cisaillement nul de 0,1 à 30 milliards de mPa.s

2. Produit suivant la revendication 1, dans lequel la viscosité en cisaillement nul est comprise dans l'intervalle de 0,1 à 1,0 milliard de mPa.s.

3. Produit suivant la revendication 1, dans lequel la viscosité en cisaillement nul est comprise dans l'intervalle de 1,0 à 10 milliards de mPa.s.

4. Produit suivant la revendication 1, dans lequel la viscosité en cisaillement nul est comprise dans l'intervalle de 10 à 20 milliards de mPa.s.

5. Produit suivant la revendication 1, dans lequel la viscosité en cisaillement nul est comprise dans l'intervalle de 20 à 30 milliards de mPa.s.

6. Procédé pour la production d'un produit consistant en hyaluronane de haut poids moléculaire, comprenant les étapes consistant à :

sélectionner génotypiquement et phénotypiquement des crêtes de coqs, comprenant du hyaluronane ayant un poids moléculaire compris dans l'intervalle de 10 à 50 millions de daltons ;
extraire le hyaluronane des crêtes de coqs, et
traiter le hyaluronane pour préparer un produit consistant en hyaluronane ayant une viscosité en cisaillement de 0,1 à 30 milliards de mPa.s.

7. Procédé suivant la revendication 6, comprenant les étapes suivantes après sélection des crêtes de coqs,

- extraction de l'eau et des sels et réduction des microorganismes ;
- prétraitement des crêtes par congélation et dissociation des crêtes ;
- lessivage du hyaluronane ;
- élimination des impuretés ;
- concentration du hyaluronane ; et
- emballage et stérilisation du produit consistant en hyaluronane.

8. Procédé suivant la revendication 6 ou 7, dans lequel les crêtes de coqs sont obtenues à partir de l'espèce White Leghorn.

9. Utilisation du produit suivant l'une quelconque des revendications 1 à 5 ou d'un produit préparé par le procédé suivant l'une quelconque des revendications 6 à 8, pour des applications médicales.